# EUROPÄISCHE PATENTSCHRIFT

(11) **EP 3 790 694 B1**
(45) Veröffentlichungstag und Bekanntmachung des Hinweises auf die Patenterteilung: **09.08.2023**
(21) Anmeldenummer: 19720530.5
(22) Anmeldetag: 25.04.2019
(51) Int. Cl.: B23B 31/02, B23B 31/20

(54) **SPANNVORRICHTUNG**
CLAMPING APPARATUS
DISPOSITIF DE SERRAGE

(30) Priorität: 11.05.2018 DE 102018003839
(43) Veröffentlichungstag der Anmeldung: 17.03.2021
(73) Patentinhaber: Gleason-Hurth Tooling GmbH, 80809 München (DE)
(72) Erfinder: SCHNEIDER, Christoph, 71686 Remseck (DE); RUSCH, Uwe, 71636 Ludwigsburg (DE)
(74) Vertreter: Leinweber & Zimmermann
(86) Internationale Anmeldenummer: PCT/EP2019/060649
(87) Internationale Veröffentlichungsnummer: WO 2019/214962

(56) Entgegenhaltungen:
- EP-A1- 1 101 554
- DE-B3-102013 201 071
- DE-U1-202009 004 585
- GB-A- 2 092 034
- GB-A- 2 362 345
- US-A- 2 463 165
- US-A- 2 574 754
- US-A- 2 859 041
- US-A- 5 429 376
- US-A1- 2002 145 261

## Beschreibung

Die Erfindung betrifft das Gebiet der Verzahnungsbearbeitung und speziell eine Spannvorrichtung zum Aufspannen eines eine Drehachse aufweisenden, verzahnten oder zu verzahnenden Werkstücks auf eine eine Axialrichtung definierende Spindelachse aufweisende, drehend antreibbare Spindel mit einem eine über eine Kraftübertragungseinrichtung übertragene Axialkraft in einer radial zur Spindelachse gerichtete Spannkraft umwandelnden Spannmechanismus, wobei die Kraftübertragungseinrichtung einen durch eine Führungsanordnung bezüglich einer eine Axialrichtungskomponente aufweisende Bewegung bewegungsgeführten ersten Abschnitt aufweist, sowie eine drehbare Maschinenspin-del mit einer solchen Spannvorrichtung und eine Verzahnungsmaschine mit einer solchen Spannvorrichtung.

Eine derartige Spannvorrichtung, bei der zum Aufspannen des Werkstücks eine Axialkraft in eine Radialkraft umgewandelt wird, ist aus dem Stand der Technik bekannt und wird beispielsweise zusammen mit einer drehbaren Maschinenspindel einer Verzahnungsmaschine verwendet. Der Spannmechanismus der Spannvorrichtung weist dabei üblicherweise einen Zentrierring und einen Spannring auf, die beide in Axialrichtung schräg verlaufende und zueinander komplementär ausgebildete Flächen aufweisen, die derart zusammenwirken, dass eine in der Axialrichtung auf den Spannring wirkende Kraft in eine radial zur Spindelachse wirkende Spannkraft umgewandelt wird. Je nach Ausgestaltung des Spannmechanismus kann die Spannkraft in Radialrichtung nach innen oder in Radialrichtung nach außen gerichtet sein. Die in Axialrichtung wirkende Kraft wird dabei durch eine von außen auf die Spannvorrichtung wirkende Kraft hervorgerufen, die durch eine Kraftübertragungseinrichtung auf den Spannmechanismus übertragen wird. Die Kraftübertragungseinrichtung weist dabei üblicherweise ein starres topfartiges Element auf, das mittig durch eine Bohrung in der Spindel mit der Zugstange verbunden ist. Das starre topfartige Element koppelt dabei an den Spannring, und die äußere Kraft kann an die Zugstange angreifen. Die DE 10 2013 201071 B3 beschreibt eine Spannvorrichtung nach dem Oberbegriff von Anspruch 1.

Solche Spannvorrichtungen ermöglichen in der Regel gute Einspannverhältnisse und sind einfach herzustellen und zu betätigen.

Werkstücke mit einem Einspanndurchmesser von bis zu 850 mm stellen jedoch neue Herausforderungen an die bekannten Spannvorrichtungen.

Der vorliegenden Erfindung liegt die Aufgabe zugrunde, eine Spannvorrichtung der eingangs genannten Art, insbesondere für Werkstück-Verzahnungen mit einem großen Einspanndurchmesser, bereitzustellen, bei der eine verbesserte Präzision beim Einspannen ermöglicht wird, bei dennoch vergleichsweise einfacher Ausgestaltung.

Diese Aufgabe wird von der Erfindung durch eine Weiterbildung der eingangs genannten Spannvorrichtung gelöst, die im Wesentlichen dadurch gekennzeichnet ist, dass der erste Abschnitt in mehrere in einer Umfangsrichtung voneinander beabstandete Übertragungselemente segmentiert ist.

Der Erfindung liegt somit ein gegenüber dem oben erläuterten Stand der Technik völlig unterschiedlicher Aufbau der Kraftübertragungseinrichtung zugrunde. Anstelle eines einstückigen, starren topfförmigen Elements weist die erfindungsgemäße Kraftübertragungseinrichtung mehrere, insbesondere drei, vier oder mehr in Umfangsrichtung voneinander beabstandete Übertragungselemente auf. Die Kraftübertragungseinrichtung kann somit insbesondere in einer käfigartigen Struktur gebildet sein. Dadurch wird eine Verbesserung der Führung der Kraftübertragungseinrichtung in der Führungsanordnung ermöglicht. Insbesondere wird die Gefahr eines Verkippens der Kraftübertragungseinrichtung in der Führungsanordnung und eines Aneckens der Kraftübertragungseinrichtung an der Führungsanordnung verringert.

Die Erfindung beruht zunächst auf der Erkenntnis, dass eine Aufspannpräzision bei höheren Einspanndurchmessern nicht mehr in zufriedenstellender Weise erreichbar ist. Zudem beruht die Erfindung auf der Erkenntnis, dass durch die einzelnen Übertragungselemente eine Verbesserung des Führungsverhältnisses, d.h. dem Verhältnis aus der von der Führung geführten Länge des Kraftübertragungselements und dem effektiven Durchmesser des Kraftübertragungselements erreichbar ist und eine solche Bauart trotz des beengten Raums einer bei Spindeldrehung mitdrehenden Spannvorrichtung möglich ist. Der effektive Durchmesser d ist dabei wie folgt definiert: Bezeichnet man als F die Flächenabmessung einer senkrecht zur Axialrichtung verlaufenden, durch das Kraftübertragungselement begrenzten Fläche, so besteht zwischen der Fläche F und dem effektiven Durchmesser d die folgende Beziehung: F=π(d/2)². Bei beispielsweise einem Rundbolzen ist der effektive Durchmesser d gleich dem Durchmesser des Rundbolzens. Bei einem topfartigen Element entspricht dessen effektiver Durchmesser im Wesentlichen dem Einspanndurchmesser des einzuspannenden Werkstücks. Diese können 800 mm oder mehr betragen. Durch die Segmentierung des Kraftübertragungselements ist der effektive Durchmesser nun der effektive Durchmesser der Übertragungselemente, und somit viel kleiner als der Durchmesser des Werkstücks. Dies verbessert das Führungsverhältnis erheblich. Durch die Erfindung wird somit eine Spannvorrichtung mit einem konstruktiv einfachen Aufbau bereitgestellt, die eine hohe Präzision beim Einspannen eines Werkstücks auch bei großen Aufspanndurchmessern ermöglicht, etwa Aufspanndurchmessern von mehr als 400 mm, auch mehr als 500 mm, sogar mehr als 600 mm. Sogar Anwendungen von mehr als 700 mm oder sogar mehr als 800 mm sind denkbar, derzeit gängige Aufspanndurchmesser überschreiten üblicherweise jedoch 1.000 mm nicht.

In einer erfindungsgemäßen Ausführungsform weist die Führungsanordnung mehrere den Übertragungselementen zugeordnete, in Umfangsrichtung voneinander beabstandete Führungen auf. Jedes Übertragungselement wird somit von seiner eigenen Führung geführt. Dies führt zu einer weiteren Erhöhung der Aufspannpräzision.

Bevorzugt ist mindestens eine Führung eine Dreipunktführung. Vorzugsweise ist der Schnittwinkel von je zwei durch die Punkte der Dreipunktführung verlaufenden Geraden immer kleiner als 90°. Für eine reine Dreipunktführung wird eine äquidistante, um 120° versetzte Anordnung bezüglich der Umfangsrichtung bevorzugt. Dadurch wird eine präzise Führung ohne seitliches Auskommen des jeweiligen Übertragungselements gewährleistet.

Erfindungsgemäß weist die Führungsanordnung einen sich zumindest teilweise in einer bezüglich der Spindelachse verlaufenden Radialrichtung erstreckenden und an den ersten Abschnitt ankoppelnden zweiten Abschnitt auf. Der zweite Abschnitt kann dabei einstückig ausgebildet sein. Erfindungsgemäß ist der zweite Abschnitt entsprechend dem ersten Abschnitt segmentiert Dadurch kann eine Materialeinsparung erreicht werden.

Bei segmentiertem zweiten Abschnitt wird es bevorzugt, dass das Flächenträgheitsmoment bezüglich einer axialen Kraftbelastung eines sich radial erstreckenden Segments größer ist als 200.000 mm⁴, weiter bevorzugt als 400.000 mm⁴, insbesondere als 600.00 mm⁴. Für das zugehörige Widerstandsmoment wird ein Mindestwert von 10.000 mm³, bevorzugt 15.000 mm³, insbesondere 24.000 mm³ bevorzugt in Betracht gezogen.

In einer weiteren Ausführungsform der Erfindung weist die Spannvorrichtung einen insbesondere mindestens eine Öffnung zur Spanabfuhr aufweisenden Grundkörper auf. Der Grundkörper kann dabei zumindest abschnittsweise parallel zum zweiten Abschnitt verlaufen. Diese Ausgestaltung ist besonders dann vorteilhaft, wenn das Werkstück für eine Innenverzahnung durch eine radial nach innen gerichtete Spannkraft eingespannt wird. Dann können durch die mindestens eine Öffnung des Grundkörpers beim Betrieb des Werkstücks entstehende Späne von der Innenseite der Spannvorrichtung zur Außenseite der Spannvorrichtung gelangen. Bevorzugt definieren dabei mindestens eine Öffnung des Grundkörpers und ein Zwischenraum zwischen Segmenten des zweiten und/oder des ersten Abschnitts einen Durchgang von einer Innenseite der Spannvorrichtung zu einer Außenseite der Spannvorrichtung. Dies ermöglicht eine zuverlässige Spanabfuhr.

Erfindungsgemäß weist die Kraftübertragungseinrichtung einen an den zweiten Abschnitt angekoppelten dritten Abschnitt auf. Über den dritten Abschnitt kann eine äußere Kraft an die Kraftübertragungseinrichtung koppeln. Diese äußere Kraft kann dann über den zweiten Abschnitt und den ersten Abschnitt den Spannmechanismus übertragen werden. Bevorzugt ist der dritte Abschnitt zumindest bereichsweise stangenförmig ausgebildet, insbesondere in Form einer für sich bekannten Gestaltung einer Zug-/Druckstange.

In einer bevorzugten Ausführungsform weist mindestens ein Übertragungselement eine Länge in Axialrichtung auf, die größer ist als ein effektiver Durchmesser des Übertragungselements, und insbesondere ist das Übertragungselement bolzenförmig ausgebildet. Der effektive Durchmesser ist dabei wie oben definiert. Der Bolzen kann ein Rundbolzen sein. Ein solches Übertragungselement ist besonders einfach herstellbar.

Erfindungsgemäß weist der zweite Abschnitt einen Kraftumkehrmechanismus auf, der eine auf den dritten Abschnitt ausgeübte Zugkraft bzw. Druckkraft in eine auf den ersten Abschnitt wirkende Druckkraft bzw. Zugkraft umkehrt. Ein solcher Mechanismus erhöht die Flexibilität bei der Verwendung der Spannvorrichtung. Der Kraftumkehrmechanismus kann beispielsweise durch einen Kippmechanismus realisiert werden, der im zweiten Abschnitt für eine Zwischenabstützung sorgt.

Somit ist vorgesehen, dass die größte nichtabgestützte radiale Länge der axialen Kraftübertragung im zweiten Abschnitt geringer ist als der radiale Abstand des ersten und dritten Abschnitts, insbesondere nur höchstens 80%, bevorzugt höchstens 72%, insbesondere höchstens 64% davon beträgt.

In einer bevorzugten Ausführungsform ist das Verhältnis aus einer Länge des durch die Führungsanordnung bewegungsgeführten Abschnitts der Übertragungselemente und dem effektiven Durchmesser der Übertragungselemente größer oder gleich 1/2, vorzugsweise größer oder gleich 1, weiter bevorzugt größer oder gleich 2, besonders bevorzugt größer oder gleich 3. Die oben genannten Verhältnisse aus Länge der Führung und dem effektiven Durchmesser ermöglichen eine besonders genaue Führung der Übertragungselemente der Kraftübertragungseinrichtung und somit ein besonders präzises Einspannen des Werkstücks.

In einer weiteren Ausführungsform der Erfindung kann der Spannmechanismus einen insbesondere segmentierten Spannring aufweisen, der die Spannkraft unmittelbar in das Werkstück einleitet. Durch die Segmentierung werden die beim Spannen in dem Spannring entstehenden mechanischen Spannungen verringert.

Bei einer erfindungsgemäßen Spannvorrichtung ist zu deren Betätigung insbesondere auf den dritten Abschnitt eine z.B. hydraulisch aufgebrachte Axialkraft von mindestens 5.000 N, vorzugsweise von mindestens 10.000 N, weiter bevorzugt von mindestens 18.000 N, besonders bevorzugt von mindestens 20.000 N aufzubringen. Dadurch wird eine zuverlässig stabile Einspannung bei auch höheren Drehzahlen und Fliehkräften erreicht. Sogar Einspannkräfte von mehr als 30.000 N oder mehr als 60.000 N, sogar mehr als 80.000 N sind denkbar.

Durch die Erfindung wird nicht nur eine Spannvorrichtung, sondern auch eine drehbare Maschinenspindel mit einer oben genannten Spannvorrichtung sowie eine Verzahnungsmaschine mit einer oben genannten Spannvorrichtung unter Schutz gestellt.

Weitere Einzelheiten, Merkmale und Vorteile der Erfindung ergeben sich aus der nachfolgenden Beschreibung mit Bezug auf die beigefügten Figuren, von denen
Fig. 1 eine perspektivische Schnittansicht einer ersten Ausführungsform einer erfindungsgemäßen Spannvorrichtung zeigt,
Fig. 2 eine von der Seite gesehene Schnittansicht der Spannvorrichtung von Fig. 1 zeigt,
Fig. 3 den Spannmechanismus und die Kraftübertragungseinrichtung der in den Figuren 1 und 2 dargestellten Spannvorrichtung zeigt,
Fig. 4 eine perspektivische Ansicht einer zweiten Ausführungsform einer nicht beanspruchten Spannvorrichtung zeigt,
Fig. 5 eine von der Seite gesehene Schnittansicht der Spannvorrichtung von Fig. 4 zeigt, und
Fig. 6 den Spannmechanismus und die Kraftübertragungseinrichtung der in den Figuren 4 und 5 dargestellten Spannvorrichtung zeigt.

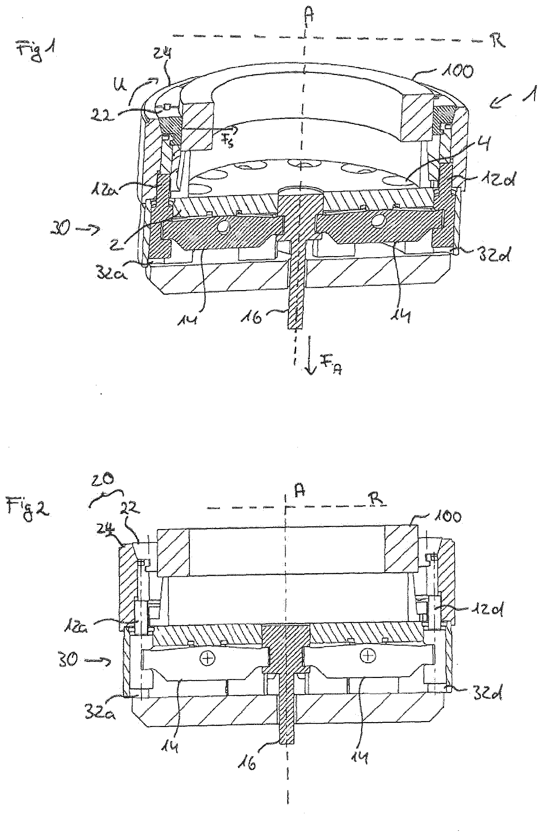

Die Figuren 1 bis 3 zeigen Ansichten einer ersten Ausführungsform einer erfindungsgemäßen Spannvorrichtung sowie eine Kraftübertragungseinrichtung einer solchen Spannvorrichtung. Figur 1 zeigt eine perspektivische Schnittansicht der Spannvorrichtung 1, die ein Werkstück 100 einspannt. Das hier mit einer Innenverzahnung zu versehende Werkstück 100 ist dabei bezüglich der Spannvorrichtung 1 radial innen eingesetzt und wird somit von radial außen eingespannt. Die erfindungsgemäße Spannvorrichtung 1 ist jedoch nicht darauf beschränkt, und es ist auch eine Spannvorrichtung denkbar, bei der das Werkstück 100 bezüglich der Spannvorrichtung 1 radial außen aufgesetzt ist und die Spannkraft von radial innen ausgeübt wird.

Die Spannvorrichtung 1 definiert eine Axialrichtung A, eine senkrecht zur Axialrichtung verlaufende Radialrichtung R und eine senkrecht zur Axialrichtung A und senkrecht zur Radialrichtung R verlaufende Umfangrichtung U.

Die Spannvorrichtung 1 weist einen Spannmechanismus 20, eine Kraftübertragungseinrichtung 10 und eine Führungsanordnung 30 auf.

Der Spannmechanismus 20 dient dem Aufspannen des Werkstücks 100. Der Spannmechanismus 20 ist derart ausgestaltet, dass er eine auf ihn wirkende Axialkraft Fₐ in eine auf das Werkstück 100 wirkende Spannkraft Fₛ umwandelt. Die Spannkraft Fₛ wirkt dabei in der Radialrichtung R. In der in Fig. 1 gezeigten Ausführungsform weist der Spannmechanismus 20 einen Spannring 22 und einen Zentrierring 24 auf. Eine erste Oberfläche des Spannrings 22 ist mit dem Werkstück 100 in Kontakt. Eine zweite Oberfläche des Spannrings 22 ist mit einer dritten Oberfläche des Zentrierrings 24 in Kontakt. Die zweite Oberfläche des Spannrings 22 ist in der Axialrichtung A schräg verlaufend. Die dritte Oberfläche des Zentrierrings 24 ist komplementär zu der zweiten Oberfläche des Spannrings 22 ausgebildet. Wirkt nun eine Kraft auf den Spannring 22, die in der Axialrichtung nach unten gerichtet ist, so wird diese Kraft durch die zweite Oberfläche des Spannrings 22 und die dritte Oberfläche des Zentrierrings 24 in eine Spannkraft Fₛ umgewandelt, die in Radialrichtung R nach innen gerichtet ist. Dadurch wird das Werkstück 100 eingespannt. Der Spannring 22 kann dabei segmentiert sein. Dies erweist sich als vorteilhaft beim Ausüben großer Spannkräfte.

Die Kraftübertragungseinrichtung 10 weist einen ersten Abschnitt 12, einen zweiten Abschnitt 14 und einen dritten Abschnitt 16 auf. Der erste Abschnitt 12 erstreckt sich in Fig. 1 in der Axialrichtung A. Der erste Abschnitt 12 ist in mehrere, hier sechs in Umfangsrichtung äquidistant angeordnete Übertragungselemente 12a, 12b, 12c, 12d (und zwei nicht dargestellte; in Fig. 1 sind nur die Übertragungselemente 12a, 12b zu sehen) segmentiert, die in der Umfangsrichtung U voneinander beabstandet sind. In der in Fig. 1 gezeigten Ausführungsform sind die Übertragungselemente 12a, 12d bolzenförmig ausgebildet. Die Bolzen weisen einen Durchmesser d auf, der gleich dem effektiven Durchmesser d der Bolzen ist.

Der zweite Abschnitt 14 koppelt an den ersten Abschnitt 12 und erstreckt sich in der Radialrichtung R. Der zweite Abschnitt 14 ist entsprechend dem ersten Abschnitt 12 segmentiert. Jedes Segment des zweiten Abschnitts 14 koppelt dabei an jeweils ein Segment des ersten Abschnitts 12.

Der dritte Abschnitt 16 koppelt an den zweiten Abschnitt und erstreckt sich in der Axialrichtung A. In der in Fig. 1 gezeigten Ausführungsform ist der dritte Abschnitt 16 bezüglich dem Grundkörper 2 in dessen Mitte angeordnet. Der dritte Abschnitt 16 koppelt dabei an alle Segmente des zweiten Abschnitts. In der dargestellten Ausführungsform ist der dritte Abschnitt 16 stangenförmig ausgebildet. Der dritte Abschnitt 16 kann jedoch auch eine andere Form aufweisen. Wird auf den dritten Abschnitt 16 eine eine Axialkomponente aufweisende Kraft Fₐ ausgeübt, so wird diese Kraft über den zweiten Abschnitt 14 und den ersten Abschnitt 12 auf den Spannmechanismus 20 übertragen.

Der zweite Abschnitt 14 der ersten Ausführungsform weist einen Kraftumkehrmechanismus auf. Dieser kann eine auf den dritten Abschnitt 16 wirkende Druckkraft (Kraft in Richtung der Spannvorrichtung 1) in eine auf den ersten Abschnitt 12 wirkende Zugkraft umwandeln, und umgekehrt. Die erste Ausführungsform kann jedoch auch ohne den Kraftumkehrmechanismus ausgebildet sein.

Der Grundkörper 2 weist in der in Fig. 1 gezeigten Ausführungsform Öffnungen 4 zur Spanabfuhr auf. Dazu sind die Öffnungen 4 und die Segmente des zweiten Abschnitts 12 derart angeordnet, dass die Öffnungen 4 und die Zwischenräume zwischen den Segmenten einen Durchgang von der Innenseite zu der Außenseite der Spannvorrichtung 1 definieren. Der Grundkörper 2 kann aber auch ohne die Öffnungen 4 ausgebildet sein.

Die Führungsanordnung 30 der Spannvorrichtung 1 dient der Führung des ersten Abschnitts 12 der Kraftübertragungseinrichtung 10 in der Axialrichtung A. in der in Fig. 1 gezeigten Ausführungsform werden alle Bolzen 12a, 12b, 12c, 12d von der Führungsanordnung 30 geführt. Gemäß der ersten Ausführungsform weist die Führungsanordnung 30 mehrere, hier sechs in Umfangsrichtung U äquidistant angeordnete Führungen 32a, 32b, 32c, 32d (zwei der Führungen sind in den Figuren nicht dargestellt) auf, von denen in Fig. 1 nur die Führungen 32a und 32d zu sehen sind. In der gezeigten Ausführungsform sind die Führungen 32 jeweils röhrenförmig ausgebildet. Je eine Führung 32a, 32b, 32c, 32d führt dabei einen Bolzen 12a, 12b, 12c, 12d. Die Führungen 32 sind jedoch nicht auf die in Fig. 1 gezeigte Ausgestaltung beschränkt und können auch anders, beispielsweise als Dreipunktführung ausgebildet sein. Durch die Führung jedes Übertragungselements 12a, 12b, 12c, 12d in einer eigenen Führung 32a, 32b, 32c, 32d wird ein besonders günstiges Führungsverhältnis erreicht. Dadurch wird eine besonders präzise Führung des ersten Abschnitts 12 erreicht, wodurch eine hohe Präzision beim Einspannen des Werkstücks 100 erreicht wird. Eine solche Spannvorrichtung ist besonders bei Werkstücken 100 mit einem großen Aufspanndurchmesser von Vorteil.

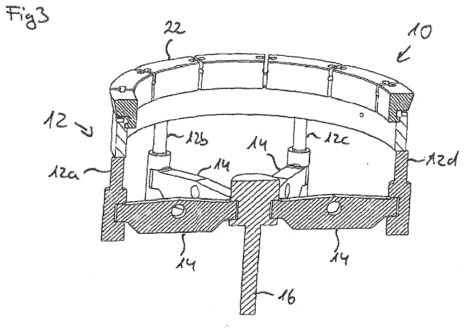

In Fig. 3 ist die Kraftübertragungseinrichtung 10 mit dem Spannring 22 des Spannmechanismus 20 der in den Figuren 1 und 2 gezeigten ersten Ausführungsform der Spannvorrichtung 1 dargestellt. Die Kraftübertragungseinrichtung 10 weist eine käfigartige Struktur auf. In Fig. 3 sind die Bolzen 12a, 12b, 12c, 12d mit einem ringförmigen Element verbunden, das wiederum mit dem Spannring 22 verbunden ist. Alternativ können die Übertragungselemente 12a, 12b, 12c, 12d jedoch auch direkt mit dem Spannring 22 verbunden sein.

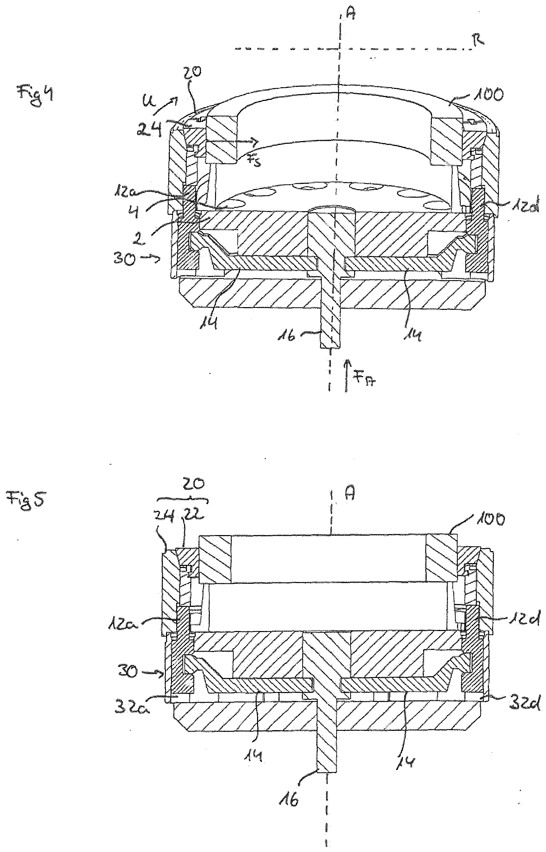

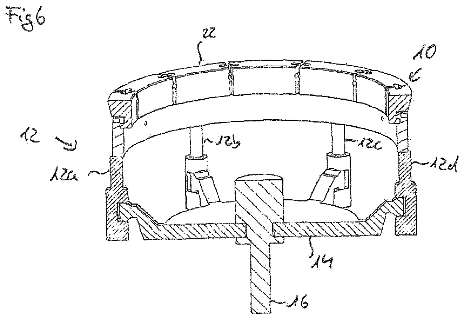

Die Figuren 4 bis 6 zeigen eine zweite Ausführungsform einer nicht beanspruchten Spannvorrichtung 1. Der Spannmechanismus 20, der Grundkörper 2, die Führungsanordnung 30 sowie der erste Abschnitt 12 und der dritte Abschnitt 16 der Kraftübertragungseinrichtung 10 sind wie bei der ersten Ausführungsform ausgestaltet und ihre Beschreibung wird deswegen nicht wiederholt. Im Gegensatz zur ersten Ausführungsform ist jedoch bei der zweiten Ausführungsform der zweite Abschnitt 14 der Kraftübertragungseinrichtung 10 nicht segmentiert. Der zweite Abschnitt 14 weist stattdessen einen sich in Radialrichtung erstreckenden scheibenförmigen Bereich auf. Dies ist besonders deutlich in Fig. 6 zu sehen. Weiter weist der zweite Abschnitt 14 keinen Kraftumkehrmechanismus auf. Da der erste Abschnitt 12 der Kraftübertragungseinrichtung 10 und die Führungsanordnung 30 wie bei der ersten Ausführungsform ausgebildet sind, weist die zweite Ausführungsform der Spannvorrichtung 1 vorteilhafte Wirkungen auf wie die Spannvorrichtung 1 der ersten Ausführungsform der Erfindung.

## Patentansprüche

1. Spannvorrichtung (1) zum Aufspannen eines eine Drehachse aufweisenden, verzahnten oder zu verzahnenden Werkstücks (100) auf eine eine Axialrichtung (A) definierende Spindelachse aufweisende, drehend antreibbare Spindel,
mit einem eine über eine Kraftübertragungseinrichtung (10) übertragene Axialkraft (Fₐ) in eine radial zur Spindelachse gerichtete Spannkraft (Fₛ) umwandelnden Spannmechanismus (20), wobei die Kraftübertragungseinrichtung (10) einen durch eine Führungsanordnung (30) bezüglich einer eine Axialrichtungskomponente aufweisende Bewegung bewegungsgeführten ersten Abschnitt (12), einen sich zumindest teilweise in einer bezüglich der Spindelachse verlaufenden Radialrichtung (R) erstreckenden und an den ersten Abschnitt (12) ankoppelnden zweiten Abschnitt (14) und einen an den zweiten Abschnitt (14) angekoppelten dritten Abschnitt (16) aufweist, wobei der erste Abschnitt (12) in mehrere in einer Umfangsrichtung (U) voneinander beabstandete Übertragungselemente (12a, 12b, 12c, 12d) segmentiert ist,
**dadurch gekennzeichnet, dass** der zweite Abschnitt (14) entsprechend dem ersten Abschnitt (12) segmentiert ist und einen Kraftumkehrmechanismus aufweist, der eine auf den dritten Abschnitt (16) ausgeübte Zugkraft bzw. Druckkraft in eine auf den ersten Abschnitt (12) wirkende Druckkraft bzw. Zugkraft umkehrt.

2. Spannvorrichtung (1) nach Anspruch 1, bei der die Führungsanordnung (30) mehrere den Übertragungselementen (12a, 12b, 12c, 12d) zugeordnete, in Umfangsrichtung (U) voneinander beabstandete Führungen (32a, 32d) aufweist.

3. Spannvorrichtung (1) nach Anspruch 2, wobei mindestens eine Führung (32) eine Dreipunktführung ist.

4. Spannvorrichtung (1) nach einem der vorangehenden Ansprüche, wobei die Spannvorrichtung (1) einen insbesondere mindestens eine Öffnung (4) zur Spanabfuhr aufweisenden Grundkörper (2) aufweist.

5. Spannvorrichtung (1) nach Anspruch 4, wobei mindestens eine Öffnung (4) des Grundkörpers (2) und ein Zwischenraum zwischen Segmenten des zweiten und/oder ersten Abschnitts (14) einen Durchgang von einer Innenseite der Spannvorrichtung (1) zu einer Außenseite der Spannvorrichtung (1) definieren.

6. Spannvorrichtung (1) nach einem der vorhergehenden Ansprüche, wobei der dritte Abschnitt (16) zumindest bereichsweise stangenförmig ausgebildet ist.

7. Spannvorrichtung (1) nach einem der Ansprüche 2 bis 6, wobei mindestens ein Übertragungselement (12a, 12b, 12c, 12d) eine Länge in Axialrichtung aufweist, die größer ist als ein effektiver Durchmesser (d) des Übertragungselements ist und insbesondere das Übertragungselement (12a, 12b, 12c, 12d) bolzenförmig ausgebildet ist.

8. Spannvorrichtung (1) nach einem der Ansprüche 2 bis 7, wobei das Verhältnis aus einer Länge des durch die Führungsanordnung (30) bewegungsgeführten Abschnitts der Übertragungselemente (12a, 12b, 12c, 12d) und dem effektiven Durchmesser (d) der Übertragungselemente (12a, 12b, 12c, 12d) größer oder gleich 1/2, vorzugsweise größer oder gleich 1, weiter bevorzugt größer oder gleich 2, besonders bevorzugt größer oder gleich 3 ist.

9. Spannvorrichtung (1) nach einem der vorangehenden Ansprüche, wobei der Spannmechanismus (20) einen insbesondere segmentierten Spannring (22) aufweist, der die Spannkraft (Fₛ) unmittelbar in das Werkstück (100) einleitet.

10. Spannvorrichtung (1) nach einem der vorangehenden Ansprüche, wobei eine zur Betätigung der Spannvorrichtung (1), insbesondere auf den dritten Abschnitt (16), aufzubringende Axialkraft (Fₐ) von mindestens 5.000 N, vorzugsweise von mindestens 10.000 N, weiter bevorzugt von mindestens 18.000 N, besonders bevorzugt von mindestens 24.000 N erforderlich ist.

11. Drehbare Maschinenspindel mit einer Spannvorrichtung nach einem der vorangehenden Ansprüche.

12. Verzahnungsmaschine mit einer Spannvorrichtung nach einem der Ansprüche 1 bis 10.

## Claims

1. A clamping apparatus (1) for clamping a workpiece (100), which is toothed or is to be toothed and has an axis of rotation, onto a spindle, which can be rotationally driven and has a spindle axis defining an axial direction (A),
comprising a clamping mechanism (20), which converts an axial force (Fₐ) transferred via a force transfer device (10) into a clamping force (Fₛ) directed radially to the spindle axis, wherein the force transfer device (10) has a first section (12) movably guided by a guide arrangement (30) in a movement having an axial direction component, a second section (14) which extends at least partially in a direction (R) running radially with respect to the spindle axis and which is coupled to the first section (12), and a third section (16) coupled to the second section (14), wherein the first section (12) is segmented into a plurality of transfer elements (12a, 12b, 12c, 12d) spaced apart from each other in a circumferential direction (U),
**characterised in that** the segmentation of the second section (14) corresponds to the segmentation of the first section (12) and the second section has a force reversing mechanism which reverses a tensile force or compressive force exerted on the third section (16) into a compressive force or tensile force acting on the first section (12).

2. The clamping apparatus (1) according to claim 1, in which the guide arrangement (30) has a plurality of guides (32a, 32d) associated with the transfer elements (12a, 12b, 12c, 12d) and spaced apart from each other in the circumferential direction (U).

3. The clamping apparatus (1) according to claim 2, wherein at least one guide (32) is a threepoint guide.

4. The clamping apparatus (1) according to one of the preceding claims, wherein the clamping apparatus (1) has a main body (2) which in particular has at least one opening (4) for chip removal.

5. The clamping apparatus (1) according to claim 4, wherein at least one opening (4) in the main body (2) and an intermediate space between segments of the second and/or first section (14) define a passage from an inside of the clamping apparatus (1) to an outside of the clamping apparatus (1).

6. The clamping apparatus (1) according to one of the preceding claims, wherein the third section (16) is at least partially rod-shaped.

7. The clamping apparatus (1) according to one of claims 2 to 6, wherein at least one transfer element (12a, 12b, 12c, 12d) has a length in the axial direction which is greater than an effective diameter (d) of the transfer element, and in particular the transfer element (12a, 12b, 12c, 12d) is bolt-shaped.

8. The clamping apparatus (1) according to one of claims 2 to 7, wherein the ratio of a length of the section of the transfer elements (12a, 12b, 12c, 12d) movably guided by the guide arrangement (30) and the effective diameter (d) of the transfer elements (12a, 12b, 12c, 12d) is greater than or equal to 1/2, preferably greater than or equal to 1, even more preferably greater than or equal to 2, and particularly preferably greater than or equal to 3.

9. The clamping apparatus (1) according to one of the preceding claims, wherein the clamping mechanism (20) has a clamping ring (22) which in particular is segmented and which introduces the clamping force (Fₛ) directly into the workpiece (100).

10. The clamping apparatus (1) according to one of the preceding claims, wherein an axial force (Fₐ) of at least 5000 N, preferably at least 10,000 N, even more preferably at least 18,000 N and particularly preferably at least 24,000 N, to be exerted on the third section (16) in particular, is required for operation of the clamping apparatus (1).

11. A rotatable machine spindle comprising a clamping apparatus according to one of the preceding claims.

12. A gear cutting machine comprising a clamping apparatus according to one of claims 1 to 10.

## Revendications

1. Dispositif de serrage (1) servant à installer avec serrage, sur une broche présentant un axe définissant une direction axiale (A) et susceptible d'être entraînée en rotation, une pièce d'usinage (100) dentée ou dont la denture doit être réalisée et présentant un axe de rotation,
le dispositif comprenant un mécanisme de serrage (20) transformant une force axiale (Fₐ) transmise par l'intermédiaire d'un système de transmission de force (10) en une force de serrage (Fₛ) dirigée radialement par rapport à l'axe de broche, ledit système de transmission de force (10) présentant une première section (12) guidée en déplacement par un ensemble de guidage (30) selon un déplacement présentant une composante de direction axiale, une deuxième section (14) couplée à la première section (12) et s'étendant au moins partiellement dans une direction radiale (R) par rapport à l'axe de broche, et une troisième section (16) couplée à la deuxième section (14), ladite première section (12) étant segmentée en plusieurs éléments de transmission (12a, 12b, 12c, 12d) espacés les uns des autres dans la direction périphérique (U),
**caractérisé en ce que** la deuxième section (14) est segmentée en correspondance avec la première section (12) et présente un mécanisme de renvoi de force qui renvoie une force de traction ou de compression exercée sur la troisième section (16) et en fait une force de traction ou de compression agissant sur la première section (12).

2. Dispositif de serrage (1) selon la revendication 1, dans lequel l'ensemble de guidage (30) présente plusieurs organes de guidage (32a, 32d) espacés les uns des autres dans la direction périphérique (U) et associés aux éléments de transmission (12a, 12b, 12c, 12d).

3. Dispositif de serrage (1) selon la revendication 2, dans lequel au moins un organe de guidage (32) est un organe de guidage à trois points.

4. Dispositif de serrage (1) selon l'une des revendications précédentes, dans lequel le dispositif de serrage (1) présente un corps principal (2) présentant notamment au moins une ouverture (4) permettant l'élimination des copeaux.

5. Dispositif de serrage (1) selon la revendication 4, dans lequel au moins une ouverture (4) du corps principal (2) et un interstice entre les segments de la deuxième et/ou de la première section (14) définissent un passage de l'intérieur du dispositif de serrage (1) vers l'extérieur du dispositif de serrage (1).

6. Dispositif de serrage (1) selon l'une des revendications précédentes, dans lequel la troisième section (16) est conçue au moins en partie en forme de tige.

7. Dispositif de serrage (1) selon l'une des revendications 2 à 6, dans lequel au moins un élément de transmission (12a, 12b, 12c, 12d) présente, dans la direction axiale, une longueur qui est supérieure au diamètre effectif (d) de l'élément de transmission, et dans lequel l'élément de transmission (12a, 12b, 12c, 12d) notamment est en forme de boulon.

8. Dispositif de serrage (1) selon l'une des revendications 2 à 7, dans lequel le rapport entre la longueur de la section des éléments de transmission (12a, 12b, 12c, 12d) guidée en déplacement par l'intermédiaire de l'ensemble de guidage (30) et le diamètre effectif (d) desdits éléments de transmission (12a, 12b, 12c, 12d) est supérieur ou égal à 1/2, de préférence supérieur ou égal à 1, de préférence encore supérieur ou égal à 2 et tout préférablement supérieur ou égal à 3.

9. Dispositif de serrage (1) selon l'une des revendications précédentes, dans lequel le mécanisme de serrage (20) présente une bague de serrage (22) notamment segmentée, qui introduit directement la force de serrage (Fₛ) dans la pièce (100).

10. Dispositif de serrage (1) selon l'une des revendications précédentes, dans lequel il est nécessaire d'appliquer, notamment sur la troisième section (16), une force axiale (Fₐ) d'au moins 5.000 N, de préférence d'au moins 10.000 N, de préférence encore d'au moins 18.000 N et tout préférablement d'au moins 24.000 N pour actionner le dispositif de serrage (1).

11. Broche de machine rotative dotée d'un dispositif de serrage selon l'une des revendications précédentes.

12. Machine à tailler les dentures dotée d'un dispositif de serrage selon l'une des revendications 1 à 10.
